Europäisches Patentamt

European Patent Office

Office européen des brevets

(11) Numéro de publication: **0 214 066 B1**

**FASCICULE DE BREVET EUROPEEN**

(45) Date de publication du fascicule du brevet: **04.04.90**

(51) Int. Cl.⁵: **C 25 B 11/12, C 25 B 13/04**

(21) Numéro de dépôt: **86420184.3**

(22) Date de dépôt: **08.07.86**

(54) Matériau consolidé microporeux, procédé pour son obtention, et applications notamment à la réalisation d'éléments cathodiques.

(30) Priorité: **02.08.85 FR 8511857**

(43) Date de publication de la demande:
**11.03.87 Bulletin 87/11**

(45) Mention de la délivrance du brevet:
**04.04.90 Bulletin 90/14**

(84) Etats contractants désignés:
**AT BE CH DE FR GB IT LI LU NL SE**

(56) Documents cités:
**GB-A-2 095 656**
**US-A-3 989 615**
**US-A-4 374 906**

**PATENTS ABSTRACTS OF JAPAN, vol. 7, no. 62 (E-164)1207r, 15 mars 1983; & JP-A-57 210 571 (HITACHI SEISAKUSHO K.K.) 24-12-1982**

(73) Titulaire: **RHONE-POULENC CHIMIE**
**25, quai Paul Doumer**
**F-92408 Courbevoie Cédex (FR)**

(72) Inventeur: **Bachot, Jean**
**9 rue Jean Roger Thorelle**
**F-92340 Bourg-la-Reine (FR)**
Inventeur: **Kiefer, Jean-Claude Lotissement Le Grand Caillouet**
**1 impasse des Edelweiss Blaincourt-Les-Precy**
**F60460 Precy-sur-Oise (FR)**

(74) Mandataire: **Varnière-Grange, Monique et al**
**RHONE-POULENC INTERSERVICES Service Brevets Chimie Centre de Recherches de Saint-Fons B.P. 62**
**F-69192 Saint-Fons Cédex (FR)**

# EP 0 214 066 B1

**Description**

La présente invention a pour objet un matériau consolidé microporeux comprenant notamment un empilement de fibres déposé sur une structure rigide perforée.

L'invention a également trait au procédé d'obtention d'un tel matériau et à ses applications, notamment à l'électrolyse du chlorure de sodium.

Un matériau microporeux selon l'invention peut en particulier être utilisé dans la fabrication d'électrodes volumiques de type "doigt de gant", et de séparateurs microporeux tels que diaphragmes utilisés en électrolyse.

On sait que, d'une manière générale, ces matériaux microporeux doivent répondre à plusieurs qualités:

—ils doivent présenter une microporosité contrôlée en taille des pores et en distribution de la taille des pores;

—lorsqu'on les utilise dans la réalisation de l'élément cathodique d'une cellule d'électrolyse telle que du chlorure de sodium, leur épaisseur doit être faible: de l'ordre de 0,1 mm à 5 mm, alors qu'ils doivent présenter une surface importante qui peut dépasser plusieurs m².

De plus, ces matériau microporeux doivent pouvoir être obtenus par dépôt sur une structure rigide qui présente des taux d'ouverture et des diamètres de trous importants.

Ces matériau microporeux sont obtenus généralement par filtration sous vide d'une suspension de fibres et de liants.

Les propriétés d'un tel matériau dépendent d'un certain nombre de paramètres, notamment de la nature et de la concentration:

—des matières fibreuses en suspension,

—des tensioactifs et additifs divers,

—des porogènes.

Selon l'état de l'art on fait appel à une matière fibreuse présentant une distribution polydisperse de longueurs de fibres, c'est-à-dire de spectre de tailles étalées. De la sorte, au début du dépôt de la matière fibreuse, les fibres longues forment une sorte de précouche qui arrête ensuite les fibres plus courtes. On obtient ainsi un taux d'arrêt des matières fibreuses important, malheureusement souvent au détriment de la qualité du matériau microporeux. Celui-ci, notamment dans le cas de l'électrolyse, doit être de faible épaisseur; de plus, il doit être régulier.

Par ailleurs, l'on sait que la concentration en matière fibreuse ne peut descendre en dessous d'une valeur minimale lors du dépôt, sauf à nuire à l'homogénéité et à la stabilité de la suspension.

Par là, on entend que pour obtenir un bon dépôt, il faut que le taux de matière fibreuse par unité de volume n'évolue pas lors de opération de filtration. Il s'agit là d'un point critique.

C'est pourquoi l'on a cherché depuis longtemps à améliorer la qualité de la suspension en jouant sur les paramètres précités, à savoir: la nature et la concentration des matières fibreuses, des agents tensioactifs et additifs, et des agents porogènes.

Mais l'on sait que l'on est limité dans cette voie par des contraintes liées aux caractéristiques des matériaux microporeux, imposées par l'application en électrolyse.

Enfin, dans le but d'obtenir des matériaux microporeux toujours plus performants et plus rentables d'un point de vue économique, l'on a été amené à proposer des matériaux microporeux renfermant des fibres conductrices, telles que les fibres de carbone.

Or maintenant, on a trouvé, et c'est ce qui fait l'objet de la présente invention, que ces fibres de carbone, utilisées dans des conditions spécifiques, pouvaient remplir une fonction tout à fait nouvelle et inattendue ayant trait aux caractéristiques structurelles du matériau microporeux, indépendamment de leur qualité conductrice.

Les matériaux microporeux selon l'invention se caractérisent en ce qu'ils comportent des fibres de carbone de distribution monodisperse de leurs longueurs.

Par distribution monodisperse on entend une distribution des longueurs telles que la longueur d'au moins 80%, et avantageusement 90% des fibres correspond à celle de la longueur moyenne des fibres à ±20% près et avantageusement à ±10% près.

Les fibres de carbone selon l'invention se présentent généralement sous forme de filaments dont le diamètre est inférieur à 1 mm, et de préférence, est compris entre $10^{-5}$ et 0,1 mm, et dont la longueur est supérieure à 0,1 mm et, de préférence, comprise entre 1 et 20 mm, les dites fibres présentant une résistivité égale ou inférieure à 0,4 ohm · cm.

Selon une forme de réalisation avantageuse de l'invention, la longueur des fibres est, au plus, égale au diamètre des perforations du substrat rigide perforé sur lequel est déposée la nappe fibreuse.

Un matériau microporeux selon l'invention comprend:

—un substrat rigide perforé qui peut être constitué par une cathode élémentaire telle que présentant une ou plusieurs surfaces planes ou en forme de cylindres dites "doigts de gant", présentant une surface ouverte;

—une structure fibreuse comprenant des fibres de carbone selon l'invention, éventuellement associées à des fibres telles que fibres d'amiante, avantageusement consolidée par des liants tels que des polymères notamment fluorés.

2

L'expression "polymère fluoré" désigne présentement un homopolymère ou un copolymère dérivés au moins en partie de monomères oléfiniques substitués par des atomes de fluor, ou substitués par une combinaison d'atomes de fluor et de l'un au moins des atomes de chlore, brome ou iode par monomère.

Des exemples d'homopolymères ou copolymères fluorés peuvent être constitués par les polymères et copolymères dérivés de tétrafluoroéthylène, hexafluoropropylène, chlorotrifluoroéthylène, bromotrifluoroéthylène.

De tels polymères fluorés peuvent aussi contenir jusqu'à 75 moles pour cent de motifs dérivés d'autres monomères éthyléniques insaturés contenant au moins autant d'atomes de fluor que d'atomes de carbone, comme par exemple le difluorure de vinylidène, les esters de vinyle et de perfluoroalkyle, tels que les perfluoroalcoxyéthylènes.

On peut naturellement utiliser dans l'invention plusieurs homopolymères ou copolymères fluorés tels que définis ci-avant. Il va sans dire qu'on ne sortirait pas du cadre de l'invention en associant à ces polymères fluorés une faible quantité, par exemple jusqu'à 10 ou 15% en poids de polymères dont la molécule ne renferme pas d'atomes de fluor, comme par exemple du polypropylène.

Le polymère fluoré peut représenter jusqu'à 60% du poids total de la nappe, ce taux étant plus généralement compris entre 5 et 50%. Le polymère fluoré, selon l'invention, se présente avantageusement sous forme d'une dispersion aqueuse (latex) renfermant, en général, de 30 à 70% de polymère sec, de granulométrie comprise entre 0,1 et 5 μm et, de préférence, entre 0,1 et 1 μm.

On ne sortirait pas du cadre de la présente invention en faisant appel à un polymère fluoré sous forme de poudre sèche ou de fibres.

La présente invention a également traite au procédé d'obtention d'un matériau microporeux selon lequel on dépose une suspension renfermant le liant, les fibres, éventuellement un agent porogène, sur un substrat rigide perforé, puis que, le cas échéant, l'on élimine l'agent porogène, et se caractérise par le fait que les fibres renferment des fibres de carbone à distribution monodisperse de longueurs.

De manière inattendue, l'on s'est aperçu que, d'une part, l'on pouvait atteindre un excellent taux d'arrêt, et que, d'autre part, ce taux d'arrêt subissait une décroissance lente et non plus brutale lorsque l'on allait vers les faibles longueurs de fibres.

Cette observation présente un intérêt pratique considérable.

En effet, il est dès lors possible non seulement d'obtenir des matériaux microporeux à haute performance pour une faible épaisseur, mais aussi de pouvoir recycler la suspension telle quelle, puisque l'on n'observe plus de dérive de la longueur moyenne des fibres dans la suspension recyclée.

La présente invention sera plus aisément comprise à l'aide des exemples suivants donnés à titre indicatif mais nullement limitatif.

Exemples 1 à 5

Dépôt de fibres de graphite dont la distribution des longueurs est polydisperse

A/ Préparation de la suspension

| | | |
|---|---|---|
| —H₂O adoucie | : | 7 000 g |
| —Fibres d'amiante courtes chrysotile de 1 à 5 mm | : | 37 g |
| —Bourre de graphite broyé | : | 63 g |
| —Dioctylsulfosuccinate de sodium (solution aqueuse à 65%) | : | 1 g |

Agitation rotative 30 min

| | | |
|---|---|---|
| —Polytetrafluoroéthylène (PTFE) sous forme de latex à 60% d'extrait sec | : | 60 g |

Agitation rotative 30 min

B/ Dépôt sur grille type "Doigt de gant"

Après repos de 48 heures, la suspension est réagitée avant filtration à travers une cathode élémentaire constituée par une grille de fer tressé et laminé—diamètre de fils 2 mm, ouverture 2 mm—en forme de "doigt de gant".

La suspension est filtrée en respectant le programme de vide suivant: 1 min d'immersion puis paliers successifs pendant 1 min à des vides croissants (de 2 000 en 2 000 Pa).

Le matériau composite résultant de cette filtration est alors consolidé par séchage à 100°C puis fusion à 350°C pendant 7 à 10 min.

C/ Influence de la longueur des fibres de graphite

Le taux d'arrêt des solides en suspension (fibres—polymère) sur les cathodes lors de la filtration dépend pour l'essentiel de la longueur moyenne des fibres et de la distribution de leurs longueurs.

# EP 0 214 066 B1

Comme le montre le tableau ci-dessous, l'arrêt est compris entre 80 et 90% puis s'effondre rapidement par formation de trous et de zones non couvertes lorsque la longueur moyenne baisse de façon trop importante:

| Ex. | Bourre graphite broye | | | | | | | | | Taux arrêt % | Qualité du dépôt |
|---|---|---|---|---|---|---|---|---|---|---|---|
| | Longueur moyenne mm | Distribution des longueurs % | | | | | | | | | |
| | | <0,5 mm | 0,5—1 mm | 1—1,5 mm | 1,5—2 mm | 2—2,5 mm | 2,5—3 mm | >3 mm | | | |
| 1 | ≃3 | ←————15————→ | | | | 10 | 25 | 50 | | 84 | non acceptable |
| 2 | ≃2,5 | ←——10——→ | | | | 10 | 35 | 30 | 15 | 87 | acceptable |
| 3 | ≃2 | ←—9—→ | | 15 | 30 | 35 | 10 | <1 | | 81 | homogène |
| 4 | ≃1,5 | 5 | 20 | 30 | 35 | 10 | 2 | — | | 42 | zone non couverte |
| 5 | ≃1 | 15 | 35 | 45 | 8 | <1 | — | — | — | | pratiquement pas de dépôt |

Le taux d'arrêt est bon pour les longueurs ≥2 mm. Toutefois, lorsque la longueur moyenne s'accroît trop, la qualité de la suspension et du dépôt se dégrade rapidement. Dans tous les cas, l'effondrement du taux d'arrêt est brutal dès que la longueur moyenne est <à 2 mm.

Exemples 6 à 11

Dépôt de fibres de graphite dont la distribution des longueurs est de type monodisperse

Les suspensions et les dépôts sont réalisés exactement dans les mêmes conditions que dans les exemples 1 à 5. Seule la distribution des longueurs des fibres de graphite est modifiée. Dans ces exemples 6 à 11 au moins 95% des fibres ont des longueurs égales à la valeur moyenne ±10%. Cette distribution, qui va à l'encontre des distributions habituellement utilisées pour la réalisation des dépôts, permet, dans le cas des fibres de graphite, d'obtenir des améliorations significatives que le tableau de résultats ci-dessous met bien en évidence.

| Ex. | Fibres de graphite en % | | | | | | | Taux arrêt % | Qualité du dépôt |
|---|---|---|---|---|---|---|---|---|---|
| | <1 | 1,25 mm | 1,5 mm | 1,75 mm | 2 mm | 2,5 mm | 3,0 mm | | |
| 6 | — | — | — | — | — | — | ≥95 | 86 | acceptable |
| 7 | — | — | — | — | — | ≥95 | — | 83 | homogène |
| 8 | — | — | — | — | ≥95 | — | — | 80 | homogène |
| 9 | — | — | — | ≥95 | — | — | — | 72 | homogène |
| 10 | — | — | ≥95 | — | — | — | — | 60 | homogène |
| 11 | — | ≥95 | — | — | — | — | — | 35 | quelques trous |

Sur toute la gamme des longueurs de fibres le dépôt est régulier et homogène. Le taux d'arrêt décroche lentement et non plus brutalement pour des fibres ≤2 mm. De plus, la partie des solides qui se retrouve dans les filtrats et très voisine de la suspension initiale, alors que dans les essais 1 à 5 on observait un raccourcissement important des longueurs moyennes des fibres. Dans ces conditions, les filtrats sont recyclables pratiquement tels quels, sans dérive de la qualité des suspensions et dépôts.

Enfin et surtout, ces exemples mettent en évidence un avantage important de l'invention qu'il n'est pas possible d'obtenir selon la méthode de l'art antérieur.

4

Un point délicat réside dans le réglage de l'épaisseur du dépôt conducteur qui doit être petite. Dans le cas des dépôts sur des cathodes creuses dont le volume intérieur est important (volume mort) et si les taux d'arrêts sont toujours ⩾80%, on ne peut limiter le poids des fibres déposées à une valeur inférieure à celui des fibres contenues dans le volume de suspension qui a rempli le volume mort dans la cathode utilisée, soit au mieux à 80% de cette valeur. Ceci conduit à des épaisseurs minimales qui peuvent être supérieures aux valeurs recherchées. Au contraire, la présente invention permet de maîtriser l'épaisseur de la couche fibreuse en jouant sur le taux d'arrêt.

**Revendications pour les Etats Contractants: BE, CH, DE, FR, GB, IT, LI, LU, NL, SE**

1. Matériau microporeux, consolidé, comprenant un empilement de fibres déposé sur un substrat rigide perforé, le dit empilement renfermant des fibres de carbone et étant consolidé par un polymère fluoré, caractérisé en ce que les fibres de carbone présentant une distribution de longueurs telles que la longueur d'au moins 80% des fibres correspond à la longueur moyenne des dites fibres à plus ou moins 20% près.

2. Matériau microporeux selon la revendication 1, caractérisé en ce que les fibres de carbone présentent une distribution des longueurs telle que la longueur d'au moins 80% des fibres correspond à celle de la longueur moyenne des fibres à 10% près.

3. Matériau microporeux selon la revendication 1, caractérisé en ce que les fibres de carbone présentent une distribution des longueurs telle que la longueur d'au moins 90% des fibres correspond à celle de la longueur moyenne des fibres à 20% près.

4. Matériau microporeux selon la revendication 2, caractérisé en ce que les fibres de carbone présentent une distribution des longueurs telle que la longueur d'au moins 90% des fibres correspond à celle de la longueur des fibres à 10% près.

5. Matériau microporeux selon l'une quelconque des revendications précédentes, caractérisé en ce que les fibres de carbone se présentent sous forme de filaments dont le diamètre est inférieur à 1 mm et dont la longueur est supérieure à 0,1 mm, les dites fibres présentent une résistivité égale ou inférieure à 0,4 ohm cm.

6. Matériau microporeux selon l'une quelconque des revendications précédentes, caractérisé en ce que la longueur des fibres est au plus égale au diamètre des perforations du substrat rigide perforé sur lequel est déposée la nappe fibreuse.

7. Matériau microporeux selon l'une quelconque des revendications précédentes, caractérisé en ce que le substrat rigide perforé est une cathode élémentaire.

8. Matériau microporeux selon l'une quelconque des revendications précédentes, caractérisé en ce que l'empilement de fibres comprend également des fibres d'amiante.

9. Procédé d'obtention d'un matériau selon l'une quelconque des revendications précédentes, caractérisé en ce qu'il comprend le dépôt d'une structure fibreuse par filtration d'une suspension renfermant des fibres de carbone et un liant à base de polymères fluorés sur un substrat rigide perforé et la consolidation de la nappe ainsi formée par un traitement thermique.

10. Application d'un matériau microporeux selon l'une quelconque des revendications 1 à 8 à l'électrolyse du chlorure de sodium.

**Revendications pour l'Etat Contractant: AT**

1. Procédé d'obtention d'un matériau microporeux et consolidé, comprenant le dépôt d'une structure fibreuse sur un substrat rigide perforé caractérisé en ce qu'il comprend le dépôt par filtration d'une suspension renfermant des fibres de carbone et un liant à base de polymères fluorés sur un substrat rigide perforé, les fibres de carbone présentant une distribution du longueurs telle que la longueur d'au moins 80% des fibres correspond à la longueur moyenne des dites fibres à plus ou moins 20% près.

2. Procédé selon la revendication 1, caractérisé en ce que les fibres de carbone contenues par la suspension présentent une distribution des longueurs telle que la longueur d'au moins 80% des fibres correspond à celle de la longueur moyenne des fibres à 10% près.

3. Procédé selon la revendication 1, caractérisé en ce que les fibres de carbone contenues par la suspension présentent une distribution des longueurs telle que la longueur d'au moins 90% des fibres correspond à celle de la longueur moyenne des fibres à 20% près.

4. Procédé selon la revendication 2, caractérisé en ce que les fibres de carbone contenues par la suspension présentent une distribution des longueurs telle que la longueur d'au moins 90% des fibres correspond à celle de la longueur des fibres à 10% près.

5. Procédé selon l'une quelconque des revendications précédentes caractérisé en ce que les fibres de carbone contenues par la suspension se présentent sous forme de filaments dont le diamètre est inférieur à 1 mm et dont la longueur est supérieure à 0,1 mm, les dites fibres présentent une résistivité égale ou inférieure à 0,4 ohm cm.

6. Procédé selon l'une quelconque des revendications, caractérisé en ce que la longueur des fibres de carbone contenues par la suspension est au plus égale au diamètre des perforations du substrat rigide perforé sur lequel est déposée la nappe fibreuse.

7. Procédé selon l'une quelconque des revendications, caractérisé en ce que le dépôt est réalisé sur un substrat rigide perforé constitué par une cathode élémentaire.

8. Procédé selon l'une quelconque des revendications, caractérisé en ce que la suspension déposée comprend également des fibres d'amiante.

9. Procédé d'obtention d'un matériau selon l'une quelconque des revendications précédentes, caractérisé en ce qu'il comprend le dépôt d'une structure fibreuse par filtration d'une suspension renfermant des fibres de carbone et un liant à base de polymères fluorés sur un substrat rigide perforé et la consolidation de la nappe ainsi formée par un traitement thermique.

**Patentansprüche für die Vertragsstaaten: BE, CH, DE, FR, GB, IT, LI, LU, NL, SE**

1. Mikroporöses, verstärktes Material enthaltend ein Faserstapel auf einem starren, durchbrochenen Substrat, wobei der Stapel Kohlenstoffasern, gebunden mit einem Fluorpolymeren enthält, dadurch gekennzeichnet, daß die Kohlenstoffasern eine derartige Verteilung ihrer Längen aufweist, daß zumindest 80% der Fasern eine Länge entsprechend der mittleren Faserlänge ±20% beträgt.

2. Mikroporöses Material nach Anspruch 1, dadurch gekennzeichnet, daß die Verteilung der Länge der Kohlenstoffasern derart ist, daß zumindest 80% der Fasern der mittleren Faserlänge ±10% entspricht.

3. Mikroporöses Material nach Anspruch 1, dadurch gekennzeichnet, daß die Verteilung der Länge der Kohlenstoffasern derartig ist, daß zumindest 90% der Fasern der mittleren Länge ±20% entspricht.

4. Mikroporöses Material nach Anspruch 2, dadurch gekennzeichnet, daß die Verteilung der Länge der Kohlenstoffasern derart ist, daß zumindest 90% der Fasern der mittleren Länge ±10% entspricht.

5. Mikroporöses Material nach einem der vorhergehenden Patentansprüche, dadurch gekennzeichnet, daß die Kohlenstoffasern als Filamente mit einem Durchmesser von <1 mm und einer Länge von >0,1 mm vorliegen, wobei fie Fasern einen speziefischen Leitungswiderstand von $\leq 0,4\ \Omega \cdot cm$ besitzen.

6. Mikroporöses Material nach einem der vorhergehenden Ansprüche, dadurch gekennzeichnet, daß die Faserlänge höchstens gleich ist dem Durchmesser der Perforationen des starren Substrats, auf welchem das Faser-Vlies abgelagert ist.

7. Mikroporöses Material nach einem der vorhergehenden Ansprüche, dadurch gekennzeichnet, daß das perforierte, starre Substrat eine Kathode einer Elementarzelle ist.

8. Mikroporöse Material nach einem der vorhergehenden Ansprüche, dadurch gekennzeichnet, daß der Faserstapel auch Asbestfasern enthält.

9. Verfahren zur Herstellung des Materials nach einem der vorhergehenden Ansprüche, dadurch gekennzeichnet, daß man eine Faserstrucktur durch Filtration eine Aufschlämmung von Kohlenstoffasern und einem Bindemittel auf der Basis eines Fluorpolymeren auf dem perforierten, starren Substrat ablagert und das Faser-Vlies durch eine Wärmebehandlung verfestigt.

10. Anwendung des mikroporösen Materials nach einem der Ansprüche 1 bis 8 im Rahmen der Natriumchlorid - Elektrolyse.

**Patentansprüche für den Vertragsstaat: AT**

1. Verfahren zur Herstellung eines mikroporösen, verstärkten Materials enthaltend ein Faserstapel auf einem starren, durchbrochenen Substrat, dadurch gekennzeichnet, daß man eine Faserstruktur durch Filtration einer Aufschlämmung von Kohlenstoffasern und einem Bindemittel auf der Basis eines Fluorpolymeren auf derm perforierten, starren Substrat ablagert, wobei die Kohlenstoffasern eine derartige Verteilung ihrer Längen aufweist, daß zumindest 80% der Fasern eine Länge entsprechend der mittleren Faserlänge ±20% besitzen.

2. Verfahren nach Anspruch 1, dadurch gekennzeichnet, daß die Verteilung der Länge der Kohlenstoffasern der Suspension derart ist, daß zumindest 80% der Fasern der mittleren Faserlänge ±10% entsprechen.

3. Verfahren nach Anspruch 1, dadurch gekennzeichnet, daß die Verteilung der Länge der in der Suspension enthaltenen Kohlenstoffasern derartig ist, daß zumindest 90% der Fasern der mittleren Länge ±20% entsprechen.

4. Verfahren nach Anspruch 2, dadurch gekennzeichnet, daß die Verteilung der Länge der in der Suspension enthaltenen Kohlenstoffasern derart ist, daß zumindest 90% der Fasern der mittleren Länge ±10% entsprechen.

5. Verfahren nach einem der vorhergehenden Ansprüche, dadurch gekennzeichnet, daß in der Suspension enthaltenen Kohlenstoffasern Filamente mit einem Durchmesser von <1 mm und einer Länge von <0,1 mm sind, wobei die Fasern einen spezifischen Leitungswiderstand von $\leq 0,4\ \Omega \cdot cm$ besitzen.

6. Verfahren nach einem der vorhergehenden Ansprüche, dadurch gekennzeichnet, daß die Länge der Kohlenstoffasern aus der Suspension höchstens gleich ist dem Durchmesser der Perforationen des starren Substrats, auf welchem das Faser-Vlies abgelagert wird.

7. Verfahren nach einem der vorhergehenden Ansprüche, dadurch gekennzeichnet, daß man zur Abscheidung als perforiertes, starres Substrat die Kathode einer Elementarzelle verwendet.

8. Verfahren nach einem der vorhergehenden Ansprüche, dadurch gekennzeichnet, daß die Suspension auch Asbestfasern enthält.

9. Verfahren nach einem der vorhergehenden Ansprüche, dadurch gekennzeichnet, daß man eine

6

## EP 0 214 066 B1

Faserstruktur durch Filtration einer Aufschlämmung von Kohlenstoffasern und einem Bindemittel auf der Basis eines Fluorpolymeren auf dem perforierten, starren Substrat ablagert und das so erhaltene Faser-Vlies durch eine Wärmebehandlung verfestigt.

**Claims for the Contracting States: BE, CH, DE, FR, GB, IT, LI, LU, NL, SE**

1. Consolidated microporous material comprising a stack of fibres deposited on a perforated rigid substrate, the said stack containing carbon fibres and being consolidated by a fluorine-containing polymer, characterized in that the carbon fibres have a length distribution such that the length of at least 80% of the fibres corresponds to the mean length of the said fibres to within about plus or minus 20%.

2. Microporous material according to Claim 1, characterized in that the carbon fibres have a length distribution such that the length of at least 80% of the fibres corresponds to that of the mean length of the fibres to within about 10%.

3. Microporous material according to Claim 1, characterized in that the carbon fibres have a length distribution such that the length of at least 90% of the fibres corresponds to that of the mean length of the fibres to within about 20%.

4. Microporous material according to Claim 2, characterized in that the carbon fibres have a length distribution such that the length of at least 90% of the fibres corresponds to that of the mean length of the fibres to within about 10%.

5. Microporous material according to any one of the preceding claims, characterized in that the carbon fibres are in the form of filaments the diameter of which is less than 1 mm and the length of which is greater than 0.1 mm, the said fibres having a resistivity equal to or less than 0.4 ohm cm.

6. Microporous material according to any one of the preceding claims, characterized in that the length of the fibres is at most equal to the diameter of the perforations of the perforated rigid substrate on which the fibrous deposit is deposited.

7. Microporous material according to any one of the preceding claims, characterized in that the perforated rigid substrate is an elementary cathode.

8. Microporous material according to any one of the preceding claims, characterized in that the stack of fibres also contains asbestos fibres.

9. Process for obtaining a material according to any one of the preceding claims, characterized in that it comprises the deposition of a fibrous structure by filtration of a suspension containing carbon fibres and a binder based on fluorine-containing polymers on a perforated rigid substrate and the consolidation of the deposit thus formed by a heat treatment.

10. Application of a microporous material according to any one of Claims 1 to 8 to the electrolysis of sodium chloride.

**Claims for the Contracting State: AT**

1. Process for obtaining a consolidated and microporous material, comprising the deposition of a fibrous structure on a perforated rigid substrate, characterized in that it comprises the deposition by filtration of a suspension containing carbon fibres and a binder based on fluorine-containing polymers on a perforated rigid substrate, the carbon fibres having a length distribution such that the length of at least 80% of the fibres corresponds to the mean length of the said fibres to within about plus or minus 20%.

2. Process according to Claim 1, characterized in that the carbon fibres contained in the suspension have a length distribution such that the length of at least 80% of the fibres corresponds to that of the mean length of the fibres to within about 10%.

3. Process according to Claim 1, characterized in that the carbon fibres contained in the suspension have a length distribution such that the length of at least 90% of the fibres corresponds to that of the mean length of the fibres to within about 20%.

4. Process according to Claim 2, characterized in that the carbon fibres contained in the suspension have a length distribution such that the length of at least 90% of the fibres corresponds to that of the mean length of the fibres to within about 10%.

5. Process according to any one of the preceding claims, characterized in that the carbon fibres contained in the suspension are in the form of filaments the diameter of which is less than 1 mm and the length of which is greater than 0.1 mm, the said fibres having a resistivity equal to or less than 0.4 ohm cm.

6. Process according to any one of the claims, characterized in that the length of the carbon fibres contained in the suspension is at most equal to the diameter of the perforations of the perforated rigid substrate on which the fibrous deposit is deposited.

7. Process according to any one of the claims, characterized in that the deposition is effected on a perforated rigid substrate consisting of an elementary cathode.

8. Process according to any one of the claims, characterized in that the suspension deposited also contains asbestos fibres.

9. Process for obtaining a material according to any one of the preceding claims, characterized in that it comprises the deposition of a fibrous structure by filtration of a suspension containing carbon fibres and a binder based on fluorine-containing polymers on a perforated rigid substrate and the consolidation of the deposit thus formed by a heat treatment.